(19) Europäisches Patentamt
European Patent Office
Office européen des brevets

(11) **EP 1 950 779 B1**

(12) **EUROPEAN PATENT SPECIFICATION**

(45) Date of publication and mention
of the grant of the patent:
**26.07.2017 Bulletin 2017/30**

(21) Application number: **06822886.5**

(22) Date of filing: **02.11.2006**

(51) Int Cl.:
*H01G 11/04* (2013.01)    *H01G 11/50* (2013.01)
*H01G 11/32* (2013.01)    *H01G 11/24* (2013.01)
*H01M 4/02* (2006.01)    *H01M 4/38* (2006.01)
*H01M 4/587* (2010.01)    *H01M 10/052* (2010.01)
*H01M 4/133* (2010.01)    *H01M 4/134* (2010.01)
*H01M 4/40* (2006.01)

(86) International application number:
**PCT/JP2006/321968**

(87) International publication number:
**WO 2007/052742 (10.05.2007 Gazette 2007/19)**

(54) **BATTERY DEVICE**

BATTERIE

BATTERIE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **04.11.2005 JP 2005320694**

(43) Date of publication of application:
**30.07.2008 Bulletin 2008/31**

(73) Proprietors:
• **Stella Chemifa Corporation
Osaka 541-0047 (JP)**
• **Cataler Corporation
Shizuoka 437-1492 (JP)**

(72) Inventors:
• **NISHIDA, Tetsuo
Izumiotsu-shi
Osaka 595-0075 (JP)**
• **TSURUMARU, Hitoshi
Izumiotsu-shi
Osaka 590-0982 (JP)**
• **KON, Sojiro
Izumiotsu-shi
Osaka 590-0982 (JP)**

• **KUME, Tetsuya
Kakegawa-shi
Shizuoka 437-1492 (JP)**
• **SAKAKIBARA, Yoshinobu
Kakegawa-shi
Shizuoka 437-1492 (JP)**
• **YANAGI, Kazuaki
Kakegawa-shi
Shizuoka 437-1492 (JP)**

(74) Representative: **Sajda, Wolf E.
Meissner Bolte Patentanwälte
Rechtsanwälte Partnerschaft mbB
Postfach 86 06 24
81633 München (DE)**

(56) References cited:
**EP-A2- 0 817 295      JP-A- 11 031 637
JP-A- 11 317 333      JP-A- 11 345 747
JP-A- 60 167 279      JP-A- 2001 236 960
JP-A- 2002 025 867      JP-A- 2005 294 780
JP-A- 2005 294 780      US-A- 5 953 204**

**Description**

TECHNICAL FIELD

The present invention relates to a battery device provided with a positive electrode having at least a positive electrode active material layer and a positive electrode collector, a negative electrode, a separator, and an organic electrolytic solution.

BACKGROUND ART

In recent years, improved output densities and energy densities have been required of electrochemical devices including electric double layer capacitors and lithium ion batteries. Such a device is described in Patent Document JP 2005 294780 A.

In an electric double layer capacitor, a polarizable electrode which mainly contains activated carbon for a positive electrode and a negative electrode is used. When a water-based electrolytic solution is used, the electric double layer capacitor usually has a voltage resistance of 1.2 V. When an organic electrolytic solution is used, the electric double layer capacitor has a voltage resistance of 2.5 V to 3 V.

Since the electrostatic energy of the electric double layer capacitor is proportional to the square of the voltage resistance, the energy in the organic electrolytic solution having a higher voltage resistance can be enhanced as compared with the water-based electrolytic solution. However, the electric double layer capacitor using the organic electrolytic solution has a low capacity, and for example, the electric double layer capacitor is insufficiently carried as an auxiliary power of a hybrid car, and requires the enhancement in energy density.

The principle of the electric double layer capacitor is that electric charges are stored in an electric double layer formed at the interface between the polarizable electrode and the electrolytic solution. The electric capacity of the electric double layer is proportional to the area of the polarizable electrode. Therefore, a method for enlarging the specific surface area of the activated carbon has been carried out as a technique for enhancing the electric capacity of the electric double layer capacitor.

The activated carbon is usually obtained by carbonizing a carbonaceous raw material at a temperature of 500 °C or less and then carrying out an activation process. The activation process is a method for heating the material under an atmosphere of steam or carbon dioxide or the like at 600 °C to 1000 °C, or mixing potassium hydrate or the like with the material and heat-treating the mixture under an atmosphere of inactive gas. This activation process forms a large number of fine pores in the carbonaceous material and increases the specific surface area of the activated carbon. The specific surface area of the usual activated carbon thus obtained is 1000 to 2000 $m^2/g$, and is less than or comparable to 3000 $m^2/g$.

Thus, the electric capacity of the electric double layer capacitor is enhanced by using the activated carbon having the extended specific surface area. However, the limit of the electric capacity has been mostly reached. Alternatively, when the specific surface area of the activated carbon is excessively enlarged, unfortunately, the diameter of each of the fine pores is excessively reduced and the resistance is generated when electrolytic ions move, thereby increasing the resistance as the capacitor.

There has been proposed a method for using a novel carbon material as an electrode material in order to enhance energy stored in the electric double layer capacitor.

For example, Patent Document 1 describes a method for using non-porous carbon which has microcrystal carbon similar to graphite as a polarizable electrode and has an interlayer distance of $d_{002}$ planes of 0.360 nm to 0.380 nm. Although this non-porous carbon has a low specific surface area of 270 $m^2/g$ or less, the non-porous carbon can realize a high capacity when the non-porous carbon is used as the electrode material of the electric double layer capacitor. Alternatively, Patent Document 2 describes that electrolytic ions intercalate into the interlayer of the microcrystal carbon with a solvent as the reason why high electric capacity is expressed when this carbon material is used.

Patent Document 3 describes that an electric double layer capacitor having a high electric capacity can be realized by using non-porous carbon having an interlayer distance of $d_{002}$ planes of 0.360 nm to 0.380 nm and a specific surface area of 270 $m^2/g$ or less, and using an organic electrolytic solution containing alkyl imidazolium tetrafluoroborate as an electrolyte.

Patent Document 4 discloses that an electric double layer capacitor having few volume expansion and a high capacity can be attained by using non-porous carbon having a specific surface area of 300 $m^2$ or less, the non-porous carbon produced by using a needle coke green powder as a raw material, and an electrolytic solution containing a specific pyrrolidinium compound as an electrolyte.

As described above, the electric double layer capacitor using the non-porous carbon could enhance energy density dramatically as compared with the conventional electric double layer capacitor. However, the operating voltage is about 3 V to 3.5 V, and higher energy density and voltage have been required.

On the other hand, a lithium ion battery uses a ceramics material storing and releasing lithium such as lithium cobaltate and lithium manganate for a positive electrode and a carbon material storing and releasing lithium for a negative electrode. An organic electrolytic solution in which a lithium salt such as $LiPF_6$ is dissolved is used for an electrolytic solution.

Although the lithium ion battery can be operated with a higher voltage as compared with the electric double layer capacitor and has a high energy density, unfortunately, the lithium ion battery has deteriorated output characteristics and a remarkably short life as compared with the electric double layer capacitor.

Patent Document 5 discloses a battery device using activated carbon for a positive electrode and a carbon material storing and releasing lithium ions for a negative electrode as a technique for solving these problems. This battery device can enhance the voltage as compared with the conventional electric double layer capacitor, and therefore, the energy density can be enhanced. Alternatively, the battery device enables high output as compared with the conventional lithium ion battery, and has excellent cycle characteristics.

However, since the conventional activated carbon is used for the positive electrode, energy density as an electrochemistry device is regulated by the positive electrode, and is insufficient. It is necessary to enhance the capacity of the positive electrode or further enhance the operating voltage in order to further enhance the energy density.

Patent Document 6 discloses a battery device using specific activated carbon as a positive electrode and a carbon material storing and releasing lithium ions for a negative electrode. Patent Document 6 describes that a specific carbon material is a carbon material in which a graphite component and amorphous carbon are mixed. In detail, Patent Document 6 discloses that the specific carbon material is activated carbon activated by molten KOH after petroleum coke is carbonized by a heat treatment, and has a specific surface area of 500 to 1500 $m^2/g$. Although the electric capacity is improved by improving the activated carbon used for the positive electrode, the enhancement in the operating voltage is required for higher energy density.

| Patent Document 1: | Japanese Patent Application Laid-Open No. 2002-25867 |
| Patent Document 2: | Japanese Patent Application Laid-Open No. 2003-51430 |
| Patent Document 3: | WO/2004/079759 |
| Patent Document 4: | Japanese Patent Application Laid-Open No. 2005-286178 |
| Patent Document 5: | Japanese Patent No. 3689948 |
| Patent Document 6: | Japanese Patent Application Laid-Open No. 11-31637 |
| Non-patent Document 1 : | DENKI KAGAKU, 66, 1311, 1998 |
| Non-patent Document 2 : | Electrochemistry, 69,487, 2001 |
| Non-patent Document 3 : | Journal of The Electrochemical Society, 152 (3) A560-A565 (2005) |

DISCLOSURE OF THE INVENTION

PROBLEMS TO BE SOLVED BY THE INVENTION

The present invention has been made in view of the problems, and it is an object of the present invention to provide a battery device having a high operating voltage and a low capacity degradation rate.

MEANS FOR SOLVING THE PROBLEMS

The present inventors have extensively studied in order to attain the object. As a result, the present inventors could enhance the operating voltage using a specific material, and provide a battery device having a low initial irreversible capacity.

In order to solve the above problems, the invention is directed to a battery device as defined by the features of claim 1.

In the battery device, an interlayer distance $d_{002}$ of carbon microcrystals of the non-porous carbon is 0.36 nm to 0.38 nm.

In the battery device, the negative electrode preferably contains a carbonaceous material different from the carbonaceous material of the positive electrode active material.

In the battery device, the carbonaceous material preferably is a graphite material.

In the battery device, the material forming the negative electrode preferably is a simple substance, alloy or compound of metal elements capable of storing and releasing the alkali metal ions or the alkaline earth metal ions, or a simple substance, alloy or compound of semimetal elements.

In the battery device, the material forming the negative electrode preferably is any one simple substance, alloy or compound of lithium, silicon, tin and aluminum.

In the battery device, the organic electrolytic solution preferably contains an organic solvent, and an alkali metal salt or alkaline earth metal salt dissolved in the organic solvent.

In the battery device, the alkali metal salt preferably contains at least a kind of lithium salt.

EFFECT OF THE INVENTION

The present invention exhibits effects to be described below by the means described above.

That is, in the present invention, a positive electrode active material layer containing non-porous carbon having a specific surface area of 500 $m^2$/g or less as a main component in a positive electrode is used, and a material forming the negative electrode which is different from a positive electrode active material, and contains a material capable of storing and releasing alkali metal ions or alkaline earth metal ions as a main component is used. Therefore, there can be provided a battery device capable of suppressing the reduction in the capacity maintaining rate even if the operating voltage is increased.

BRIEF DESCRIPTION OF THE DRAWINGS

Fig. 1 is a schematic cross-sectional view of a battery device according to an embodiment of the present invention.

Fig. 2 is a schematic cross-sectional view of a battery device used in Examples of the present invention.

DESCRIPTION OF THE REFERENCE NUMERALS

1 positive electrode
2 negative electrode
3 separator
4 positive electrode can
5 negative electrode can
6 gasket
7 spacer
8 spring
9 bolt
10 caulking washer
11 container body
12 spacer
13 O-ring
14 lid part
15 bush
16 nut
17 electrode
18 separator
19 metal lithium
20 round plate
21 spring

BEST MODE FOR CARRYING OUT THE INVENTION

An embodiment of the present invention will be described below.

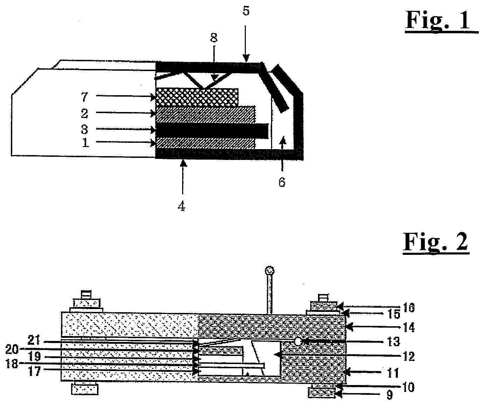

As shown in Fig. 1, a battery device according to this embodiment has a structure where a laminated body prepared by laminating a positive electrode 1, a separator 3, a negative electrode 2 and a spacer 7 in this order from the side of a positive electrode can 4 is stored in an inner space formed by the positive electrode can 4 and a negative electrode can 5. The positive electrode 1 and the negative electrode 2 are moderately pressure-bonded and fixed by interposing a spring 8 between the negative electrode can 5 and the spacer 7.

An organic electrolytic solution is impregnated between the positive electrode 1, the separator 3 and the negative electrode 2. The positive electrode can 4 and the negative electrode can 5 are combined by holding each other in a state where a gasket 6 is interposed between the positive electrode can 4 and the negative electrode can 5 to hermetically close the laminated body.

The positive electrode 1 has a positive electrode active material layer and a positive electrode collector. The positive electrode active material layer contains non-porous carbon having a specific surface area of 500 $m^2/g$ or less as a main component. The lower limit of the specific surface area of the non-porous carbon is not particularly limited as long as the non-porous carbon does not effect on the performance of the battery device. However, since an excessively low specific surface area exerts a bad influence on the output performance of the battery device, the specific surface area is preferably 10 $m^2/g$ or more, more preferably 1.30 $m^2/g$ or more, and still more preferably 270 $m^2/g$. The interlayer distance $d_{002}$ of carbon microcrystals of the non-porous carbon is preferably 0.36 nm to 0.38 nm.

The non-porous carbon can be produced by known methods described in, for example, Non-Patent Documents 1, 2 and Patent Document 2. That is, volatilization components are removed by dry-distilling easily graphitized carbon such as petroleum cork at about 700 °C to 800 °C, and furthermore, the dry-distilled easily graphitized carbon is treated in an activation process to obtain the non-porous carbon. In the activation process, caustic alkalis such as KOH used in the manufacturing process of usual activated carbon are added, and the easily graphitized carbon is heat-treated in a temperature condition of about 800 °C to 900 °C. By the method, there can be obtained carbon having a specific surface area of 500 $m^2/g$ or less and an interlayer distance $d_{002}$ of 0.36 nm to 0.38 nm. Alternatively, a clean non-porous carbon material in which surface functional groups are removed can be then obtained by carrying out a hydrogen treatment if needed.

The carbon obtained by the method has a specific surface area of 500 $m^2/g$ or less and an interlayer distance $d_{002}$ of carbon microcrystals is 0.36 to 0.38 nm. The carbon is "non-porous carbon" having extremely few fine pores so that various electrolytic ions, solvents and N gas or the like can be taken in as compared with usual activated carbon. The specific surface area and the interlayer distance can be determined by a BET method using $N_2$ as an absorbing agent and a powder XRD method, respectively.

The positive electrode collector may be a conductive material having electrochemical and chemical corrosion resistance. More specifically, plates and foils made of stainless steel, aluminum, titanium, tantalum or the like can be used. Of these, the plate and foil made of stainless steel or aluminum are a preferable collector in view of performance and cost.

The negative electrode 2 has, for example, a negative electrode active material layer and a negative electrode collector. It is preferable that a negative electrode active material is made of a different material from a positive electrode active material, and contains a material capable of storing and releasing alkali metal ions or alkaline earth metal ions as a main component.

Examples of these negative electrode active materials include a carbon material capable of storing and releasing alkali metal ions or alkaline earth metal ions; a simple substance, alloy and compound of metal elements; and a simple substance, alloy and compound of semimetal elements.

The negative electrode active material may include a different carbonaceous material from the positive electrode active material. Examples of the carbonaceous materials include a graphite-based material or a non-graphite-based material.

Examples of the graphite-based materials include, but are not limited to, natural graphite, artificial graphite, mesocarbon microbeads and a pitch-based carbon fiber graphitized substance.

Examples of the non-graphite-based materials include easily graphitized carbon, hardly graphitized carbon, low-temperature burned carbon and the like. Examples of the easily graphitized carbons include carbon prepared by burning cork or petroleum pitch at a temperature of 2000 °C or less, and the like. Examples of the hardly graphitized carbons include a polyacrylonitrile-based carbon fiber burned at about 1000 °C, furfuryl alcohol resin burned carbon, phenol-based resin burned about 1000 °C, furfuryl alcohol resin burned carbon, phenol-based resin burned carbon and the like. Examples of the low-temperature burned carbons include carbon prepared by burning the easily graphitized carbon and the hardly graphitized carbon at a low temperature below 1000 °C.

It is preferable that the negative electrode active material contains at least one of a simple substance, alloy and compound of metal elements capable of storing and releasing alkali metal ions or alkaline earth metal ions, or a simple substance, alloy and compound of semimetal elements capable of storing and releasing alkali metal ions or alkaline earth metal ions.

Examples of the metal elements or semimetal elements capable of storing and releasing the alkali metal ions or the alkaline earth metal ions include lithium, magnesium, potassium, calcium, silicon, cadmium, indium, lead, gallium, germanium, tin, aluminum, bismuth, antimony, boron, silver, zinc, copper, lead, nickel, iron, manganese, cobalt, niobium, hafnium, zirconium, yttrium, titanium, and the like.

Examples of the alloys or compounds of the metal elements or semimetal elements include $Li_4Si$, $Li_{4.4}Sn$, $LiAl$, $Li_3Cd$, $Li_3Sb$, $Li_{4.4}Pb$, $LiZn$, $Li_3Bi$, $SbSn$, $InSb$, $CoSb_3$, $Ag_3Sb$, $Ni_2MnSb$, $Sn_2Fe$, $V_2Sn_3$, $CeSn_2$, $Cu_6Sn_5$, $Ag_3Sn$, $SiB_4$, $SiB_6$, $Mg_2Si$, $Mg_2Sn$, $Ni_2Si$, $TiSi_2$, $MoSi_2$, $CoSi_2$, $NiSi_2$, $CaSi_2$, $Cu_2Si$, $FeSi_2$, $MnSi_2$, $NbSi_2$, $ZnSi_2$, and the like.

As the negative electrode active material, at least any one kind of the simple substance, alloy or compound of the metal elements, or the simple substance, alloy or compound of the semimetal elements can be singly used, or two or more kinds thereof can be used in admixture.

The simple substance, alloy or compound of the metal elements, or the simple substance, alloy or compound of the semimetal elements can be used as the negative electrode by forming a thin film on a copper foil generally used as the negative electrode collector, using, for example, a chemical plating method, a sputtering method, a vapor-deposition method or the like.

An alloy powder, which is produced in using a chemical reduction method, a mechanical alloying method or the like, is mixed and is pasted with a conductive agent and a binder. One prepared by applying the paste onto a collector such as a copper foil can be used as the negative electrode.

Examples of the negative electrode collectors include a copper foil, a nickel foil, a stainless steel foil, and the like.

As the organic electrolytic solution of the present invention, an electrolytic solution for a lithium ion battery generally used can be preferably used. More specifically, a solution can be used, which is prepared by dissolving at least any one kind of an alkali metal salt or alkaline earth metal salt in an organic solvent.

Examples of the alkali metal salts include a lithium salt, a sodium salt and a potassium salt. One kind thereof can be singly used, or two or more kinds thereof can be used in combination.

Examples of the lithium salts include, but are not limited to, lithium phosphate hexafluoride, lithium borofluoride, lithium perchlorate, lithium trifluoromethanesulfonate, lithium bis(trifluoromethanesulfonyl)imide, lithium bis(pentaethanesulfonyl)imide, lithium tris(trifluoromethanesulfonyl)methide, lithium fluorosulfonyl imide, and the like. Alternatively, one kind thereof can be singly used, or two or more kinds thereof can be used in combination.

Examples of the sodium salts include, but are not limited to, sodium phosphate hexafluoride, sodium borofluoride, sodium perchlorate, sodium trifluoromethanesulfonate, sodium bis(trifluoromethanesulfonyl)imide, sodium bis(pentaethanesulfonyl)imide, sodium tris(trifluoromethanesulfonyl)methide, sodium fluorosulfonylimide, and the like. Alternatively, one kind thereof can be singly used, or two or more kinds thereof can be used in combination.

Examples of the potassium salts include, but are not limited to, potassium phosphate hexafluoride, potassium borofluoride, potassium perchlorate, potassium trifluoromethanesulfonate, potassium bis(trifluonomethanesulfonyl)imide, potassium bis(pentaethanesulfonyl)imide, potassium tris(trifluoromethanesulfonyl)methide, potassium fluorosulfonylimide, and the like. Alternatively, one kind thereof can be singly used, or two or more kinds thereof can be used in combination. Examples of the alkaline earth metal salts include a beryllium salt, a magnesium salt, a calcium salt, and the like. One kind thereof can be singly used, or two or more kinds thereof can be used in combination.

Examples of the beryllium salts include, but are not limited to, beryllium phosphate hexafluoride, beryllium borofluoride, beryllium perchlorate, beryllium trifluoromethanesulfonate, beryllium bis(trifluoromethanesulfonyl)imide, beryllium bis(pentaethanesulfonyl)imide, beryllium tris(trifluoromethanesulfonyl)methide, beryllium fluorosulfonylimide, and the like. One kind thereof can be singly used, or two or more kinds thereof can be used in combination.

Examples of the magnesium salts include, but are not limited to, magnesium phosphate hexafluoride, magnesium borofluoride, magnesium perchlorate, magnesium trifluoromethanesulfonate, magnesium bis(trifluoromethanesulfonyl)imide, magnesium bis(pentaethanesulfonyl)imide, magnesium tris(trifluoromethanesulfonyl)methide, magnesium fluorosulfonylimide, and the like. Alternatively, one kind thereof can be singly used, or two or more kinds thereof can be used in combination.

Examples of the calcium salts include, but are not limited to, calcium phosphate hexafluoride, calcium borofluoride, perchlorate calcium, calcium trifluoromethanesulfonate, calcium bis(trifluoromethanesulfonyl)imide, calcium bis(pentaethanesulfonyl)imide, calcium tris(trifluoromethanesulfonyl)methide, calcium fluorosulfonyl imide, and the like. Alternatively, one kind thereof can be singly used, or two or more kinds thereof can be used in combination.

Examples of the organic solvents used in the present invention include cyclic carbonic acid esters, chain carbonic acid esters, phosphoric acid esters, cyclic ethers, chain ethers, lactone compounds, chain esters, nitrile compounds, amide compounds, sulfone compounds, and the like. Although not limitative, the compounds given below are more specific examples.

Examples of the cyclic carbonic acid esters include ethylene carbonate, propylene carbonate, butylene carbonate, and the like. Preferable are ethylene carbonate and propylene carbonate. Examples of the chain carbonic acid esters include dimethyl carbonate, ethylmethyl carbonate, diethyl carbonate, and the like. Preferable are dimethyl carbonate and ethylmethyl carbonate. Examples of the phosphoric acid esters include trimethyl phosphate, triethyl phosphate, ethyldimethyl phosphate, diethylmethyl phosphate, and the like. Examples of the cyclic ethers include tetrahydrofuran, 2-methyltetrahydrofuran, and the like. Examples of the chain ethers include dimethoxyethane, and the like. Examples of the lactone compounds include $\gamma$-butyrolactone, and the like. Examples of the chain esters include methyl propionate, methyl acetate, ethyl acetate, methyl formate, and the like. Examples of the nitrile compounds include acetonitrile, and the like. Examples of the amide compounds include dimethylformamide, and the like. Examples of the sulfone compounds include sulfolane, methyl sulfolane, and the like. These organic solvents may be used singly, or two or more kinds thereof can be used in combination.

As an organic electrolytic solution to be used for the battery device of the present invention, there can be used the organic electrolytic solution which contains specific organic additives.

Examples of the specific organic additives include vinylene carbonate, vinylethylene carbonate, ethylene trithiocarbonate, ethylene sulfite, and the like. Of these, vinylene carbonate can be preferably used. These additives may be used singly, or at lest two of them can be used in admixture.

The organic electrolytic solution of the present invention can be produced by, for example, dissolving lithium phosphate hexafluoride in a concentration of 1 mol/L in a solvent of a mixture prepared by mixing ethylene carbonate and ethylmethyl carbonate by a volume ratio of 1:3. Another examples include a solution prepared by dissolving lithium borofluoride in a concentration of 1 mol/L in a solvent of a mixture prepared by mixing ethylene carbonate and ethylmethyl carbonate by a volume ratio of 1:3.

The concentration of an electrolyte to be dissolved is usually 0.1 to 2.0 mol/L, preferably 0.15 to 1.5 mol/L, more preferably 0.2 to 1.2 mol/L and particularly preferably 0.3 to 1.0 mol/L. If the concentration of the electrolyte is less than 0.1 mol/L, when the current is large, depletion of ions occurs in the vicinity of the electrode to result in voltage depression. If the ion concentration of the electrolyte is over 2.0 mol/L, the electrolytic solution has unpreferably a high viscosity to entail lower electrical conductivity.

In the battery device of the present invention, the separator 3 is usually interposed between the positive electrode and the negative electrode in order to prevent the short circuit of the positive electrode and negative electrode. The material and shape of the separator 3 is not particularly limited. However, the separator 3 is preferably a material which readily passes the organic electrolytic solution therethrough, has insulating properties and is chemically stable.

Examples thereof include microporous films, sheets, and nonwoven fabrics, which are made of various kinds of polymer materials. As specific examples of the polymer materials, there are used nylon, nitrocellulose, polyacrylonitrile, polyfluorovinylidene, polyethylene, and a polyolefin polymer such as polypropylene. In view of electrochemical stability and chemical stability, a polyolefin-based polymer is preferable.

The shape of the battery device of the present invention is not particularly limited. However, examples of the shapes include a cylindrical-shaped, square-shaped and laminate-shaped cells other than a coin-shaped cell shown in Fig. 1.

Next, a method for producing the battery device of the embodiment will be described.

The positive electrode 1 can be obtained by pressure-molding the positive electrode active material described above with a known conductive auxiliary agent and binder, or by applying paste prepared by mixing the positive electrode active material, and the known conductive auxiliary agent and binder with a solvent such as pyrrolidone to a collector such as an aluminum foil and drying the paste.

Examples of the conductive auxiliary agents include, but are not limited to, graphite, carbon black, needle coke, and the like. Alternatively, one kind thereof can be singly used, or a plurality thereof can be used in admixture.

The additive amount of the conductive auxiliary agent contained in the positive electrode active material layer is usually preferably 0.01 to 20 % by weight, more preferably 0.1 to 15 % by weight, and particularly preferably 1 to 10 % by weight. When the additive amount of the conductive auxiliary agent is less than 0.01 % by weight, the conductivity may become insufficient. On the other hand, the additive amount is over 20 % by weight, the battery capacity may be reduced.

The kind of the binder is not particularly limited as long as the binder is a stable material in a nonaqueous solvent used for an electrolytic solution and a solvent used in producing an electrode. However, specific examples include polyethylene, polypropylene, polyethylene terephthalate, cellulose, styrene-butadiene rubber, isoprene rubber, butadiene rubber, fluororubber, acrylonitrile-butadiene rubber, a vinyl acetate copolymer, polyfluorovinylidene, polytetrafluoroethylene, fluorinated polyfluorovinylidene, polytetrafluoroethylene, an alkali metal ion conductive polymer, and the like. One kind of these substances can be used, or two or more kinds thereof can be used in combination.

The additive amount of the binder in the positive electrode active material layer is usually preferably 0.1 to 30 % by weight, more preferably 1 to 20 % by weight, and particularly preferably 5 to 10 % by weight. When the additive amount of the binder is less than 0.1 % by weight, the mechanical strength of the positive electrode may be insufficient to reduce the battery performance. On the other hand, the additive amount over 30 % by weight may cause the shortage of the battery capacity and the increase of electrical resistance.

The solvent for forming the paste is not particularly limited as long as the positive electrode active material, the binder and the conductive auxiliary agent can be dissolved or dispersed in the solvent, which is easily removed by the subsequent drying. Examples thereof include water, alcohol, N-methylpyrrolidone, dimethylformamide, dimethylacetamide, methylethylketone, cyclohexanone, methyl acetate, tetrahydrofuran, toluene, acetone, dimethyl ether, dimethyl sulfoxide, benzene, xylene, hexane, and the like. One kind of these solvents may be used, or two or more kinds thereof can be used in admixture.

As the negative electrode 2, there can be used one prepared by forming the negative electrode active material described above in a thin film shape, or a powdered negative electrode active material. The negative electrode 2 can be obtained by pressure-molding the powdered negative electrode active material with a known conductive auxiliary agent and binder in the same manner as in the positive electrode 1 in the case of the powdered negative electrode active material, or by mixing the powdered negative electrode active material into an organic solvent such as pyrrolidone with a known conductive auxiliary agent and binder, coating the paste on a collector such as a foil and drying the paste.

After the organic electrolytic solution is then impregnated in the positive electrode 1 and the separator 3 under reduced pressure, the positive electrode 1, the negative electrode 2, the separator 3 and the spacer 7 are placed in the order shown in Fig. 1 in the positive electrode can 4, and the positive electrode can 4 is filled with the proper quantity of the organic electrolytic solution. Furthermore, the positive electrode can 4 and the negative electrode can 5 are held in a state where the gasket 6 is interposed between the positive electrode can 4 and the negative electrode can 5 to obtain a battery device according to this embodiment.

Examples

In the following, the preferred examples of this invention are described in detail, in an illustrative manner. Here, the material, the blending quantity and the like described in these examples are not intended to limit the scope of the invention only to these, and are merely examples for description unless otherwise stated.

Example 1

Production of positive electrode

First, non-porous carbon was produced by a method described in DENKI KAGAKU, 66, 1311, 1998 or the like. The BET method confirmed that the specific surface area was 150 m$^2$/g. After 2.5 parts by weight of a polyfluorovinylidene powder (manufactured by Kureha Chemical Industry Co., Ltd., trade name: KF polymer #1100) as a binder and 5.5 parts by weight of Denka black (trade name, manufactured by DENKI KAGAKU KOGYO K.K.) as a conductive auxiliary agent were mixed with 100 parts by weight of the obtained non-porous carbon, N-methylpyrrolidone was added thereto, and they were kneaded to obtain electrode paste.

This electrode paste was applied in a uniform thickness to one surface of an aluminum foil having a thickness of 20 $\mu$m as a positive electrode collector using an applicator for electrode coating (manufactured by TESTER SANGYO CO,. LTD.). Then, the paste was vacuum-dried at a heating temperature of 130 °C for 2 hours to form a positive electrode active material layer. Thereafter, the total thickness of the active material layer was adjusted to be set to 67 $\mu$m by roll press to produce a sheet-shaped electrode. The obtained sheet-shaped electrode was formed into a circle shape to be used as a positive electrode for this test.

The weight of the positive electrode active material layer obtained by removing the weight of the positive electrode collector made of the aluminum foil from the weight of the positive electrode was 12.1 mg. The volume of the active material layer of the positive electrode formed based on the total thickness of the active material layer was 0.013 cm$^3$.

Production of electrolytic solution

LiPF$_6$ and a solvent of a mixture of ethylene carbonate (EC) and ethylmethyl carbonate (EMC) (volume ratio of 1:3, manufactured by Kishida Chemical Co., Ltd., lithium battery grade) were dissolved so that the electrolytic concentration was set to 1.15 mol/L in a dry box with an argon atmosphere having a dew point of -60 °C or less. The moisture of the solution after be mixed was measured by a Carl Fischer moisture meter (manufactured by Hiranuma Sangyo Co., Ltd., Hiranuma trace moisture measurement device AQ-7), and the moisture meter confirmed that the moisture was 30 ppm or less.

Assembly of battery

A battery device was produced using a test cell (manufactured by Japan Tomcell, Tomcell TJ-AC) having a structure shown in Fig. 2. In Fig. 2, a bolt 9, a caulking washer 10, a container body 11, a lid part 14, a nut 16, a round plate 20 and a spring 21 were made of stainless steel. There was used a separator 18 made of polypropylene and formed into a circle shape. The battery device was assembled in an argon dry box having a dew point of -60 °C or less.

First, after the bolt 9, the caulking washer 10, the container body 11, the spacer 12, the O-ring 13, the lid part 14, a bush 15, the nut 16, the electrode 17, the round plate 20 and the spring 21 were vacuum-dried at a heating temperature of 120 °C for 24 hours, they were carried in the dry box. Further, after the separator 18 was vacuum-dried at a heating temperature of 60 °C for 24 hours, the separator 18 was carried in the dry box. After the electrode sheet formed into the circle shape was vacuum-dried at 130 °C for 12 hours, the electrode sheet was carried in the dry box.

Then, after the electrolytic solution was impregnated in the electrode and the separator 18 under reduced pressure, the electrode 17, the separator 18 and the spacer 12 were placed in the order shown in Fig. 1 in the container body 11, and the container body 11 was filled with the proper quantity of the organic electrolytic solution. Then, after setting the round plate 20 to which metal lithium 19 (negative electrode, manufactured by Honjoh Metal Co., Ltd., thickness: 200 $\mu$m) and the spring 21 was stuck in the order of Fig. 1, the lid part 14 was covered from upward, and the inside of the container body was sealed by the bolt 9 and the nut 16 to produce a battery device.

Evaluation of battery device characteristic

A charge-discharge test was carried out for the battery device produced in this example. The charge-discharge test was carried out in a constant temperature machine (Espec Corp., TEMPERATURE CARBINETLU-112) in which the temperature of the atmosphere was maintained at 25 °C. After the test cell was held in the constant temperature machine for 2 hours, the constant-current charge having a current density of 0.43 mAcm$^{-2}$ was carried out, and when the voltage reached to 4.6 V, the constant-current charge was changed to constant-voltage charge.

After the voltage was held at 4.6 V for 60 minutes, the constant-current discharging of 0.43 mAcm$^{-2}$ was carried out, and when the voltage reached to 2.2 V, the constant-current discharging was changed to the constant-voltage discharging, and the voltage was held at 2.2 V for 60 minutes. The cycles were repeated 5 times, and energy density was calculated from the integrated value of electric energy in charging and discharging. The energy density was converted into the values per the weight of the positive electrode active material layer and per the volume of the positive electrode active material layer, and was shown.

Capacity maintaining rate

The capacity maintaining rate was calculated for the battery device produced in this example. The capacity maintaining rate was calculated as the percentage of the discharge energy density at a fifth cycle to the charge energy density in the initial cycle according to the following formula.

$$\underline{\text{Formula 1}}$$

$$\text{Capacity maintaining rate (\%)} = (\text{Discharge energy density at fifth cycle})/$$

$$(\text{Charge energy density at initial cycle}) \times 100$$

Example 2

This example was carried out in the same manner as in Example 1 except for setting the constant-voltage charge to 4.7 V. Referring to the capacity maintaining rate of the battery device produced in this example, the energy density obtained in discharging at a fifth cycle of Example 1 carried out at the final voltage of 4.6 V was defined as 100, and the value of the discharge energy density at a fifth cycle was calculated as percentage of the energy density obtained in charging and discharging to the energy density of Example 1.

Comparative Example 1

After 2.5 parts by weight of a polyfluorovinylidene powder (manufactured by Kureha Chemical Industry Co., Ltd., trade name: KF polymer #1100) as a binder and 5.5 parts by weight of Denka black (trade name, manufactured by DENKI KAGAKU KOGYO K.K.) as a conductive auxiliary agent were mixed with 100 parts by weight of activated carbon confirmed that the specific surface area was 2200 m$^2$/g by the BET method, N-methylpyrrolidone was added thereto, and they were kneaded to obtain electrode paste.

This paste was applied in a uniform thickness to one surface of an aluminum foil having a thickness of 30 $\mu$m as an electrode collector using an applicator for electrode coating (manufactured by TESTER SANGYO CO,. LTD.). Then, the paste was vacuum-dried at a heating temperature of 130 °C for 2 hours, and the thickness of the electrode was adjusted to 120 $\mu$m by roll press to produce a sheet-shaped electrode. The obtained sheet-shaped electrode was formed into a circle shape to be used as a positive electrode for the test. Next, an electrolytic solution was produced and a battery was assembled as in Example 1 to obtain a battery device of this Comparative Example.

The weight of the positive electrode active material layer obtained by removing the weight of the positive electrode collector made of the aluminum foil from the weight of the positive electrode was 8.6 mg. The volume of the active material layer of the positive electrode formed based on a thickness obtained by subtracting the thickness of the collector from the total thickness was 0.018 cm$^3$. Further, the capacity maintaining rate of the battery device produced in this Comparative Example was calculated in the same manner as in Example 2.

Comparative Example 2

This Comparative Example was carried out in the same manner as in Example 2 except for using the electrode produced in Comparative Example 1 for the positive electrode.

Example 3

In this example, the same battery device as that of the Example 1 was produced except for repeating the cycle 25 times in charging and discharging test, and the cycle evaluation was carried out. Energy density per the volume of the positive electrode was calculated from the integrated value of electric energy in discharge at a 25th cycle. Further, a Coulomb efficiency was also calculated by the following calculation. Furthermore, the capacity maintaining rate was calculated by the following calculation.

Formula 2

Coulomb efficiency (%) = (Discharge electric quantity at 25th cycle)/(Charge electric quantity at 25th cycle) × 100

Capacity maintaining rate (%) = (Discharge energy density at 25th cycle)/ (Discharge energy density at 10th cycle) × 100

Example 4

This example was carried out in the same manner as in Example 3 except for setting the constant-voltage charge to 4.7 V.

Example 5

This example was carried out in the same manner as in Example 3 except for using an electrolytic solution in which $LiBF_4$ of 1.15 mol/L was dissolved in a solvent of a mixture of EC and EMC by a volume ratio of 1:3.

Example 6

This example was carried out in the same manner as in Example 4 except for using an electrolytic solution in which $LiBF_4$ of 1.15 mol/L was dissolved in a solvent of a mixture of EC and EMC by a volume ratio of 1:3.

Example 7

This example was carried out in the same manner as in Example 3 except for using an electrolytic solution in which $NaPF_6$ of 0.75 mol/L was dissolved in a solvent of a mixture of EC and EMC by a volume ratio of 1:1 and a sodium foil was used for a negative electrode.

Example 8

This example was carried out in the same manner as in Example 3 except for using an electrolytic solution in which $LiPF_6$ of 1.15mol/L was dissolved in a solvent of a mixture of PC, EC and EMC in a weight ratio of 1.25:1:1.25.

Example 9

This example was carried out in the same manner as in Example 3 except for using an electrolytic solution in which $LiPF_6$ of 0.75 mol/L and $LiBF_4$ of 0.25 mol/L were dissolved in a solvent of a mixture of EC and EMC by a volume ratio of 1:3.

Example 10

This example was carried out in the same manner as in Example 3 except for using an electrolytic solution in which $LiBF_4$ of 0.75 mol/L and $LiPF_6$ of 0.25 mol/L were dissolved in a solvent of a mixture of EC and EMC by a volume ratio of 1:3.

Example 11

A graphite sheet (manufactured by Pionics Co., Ltd., Pioxcel A-100) was used for a negative electrode, and a lithium foil was used for a positive electrode. The charge was carried out to the final voltage of 50 mV in the electrolytic solution produced in the Example 1 in a charge rate of 0.1 C. The electrode was used for the negative electrode and the setting voltage of the constant-voltage discharge was set to 1.0 V. The energy density, the Coulomb efficiency and the capacity maintaining rate were calculated in the same manner as in Example 3.

Example 12

An electrode having a tin-lithium alloy layer was produced by a method disclosed in, for example, Journal of The Electrochemical Society and 152 (3) A560-A565 (2005). That is, there was prepared a plating bath having a composition of 60g/L of sulfuric acid, 40 g/L of tin sulfate, 40 g/L of ortho-cresol sulfuric acid and 100 ppm of polyethylene glycol. Tin was plated onto a copper foil by carrying out constant-current electrolysis at 10 $mAcm^{-2}$ in the plating bath for 5 minutes. The copper foil was then heat-treated at 200 °C under a vacuum condition for 24 hours. The charge was then carried out to the final voltage of 50 mV in charge rate of 0.1 C in the electrolytic solution produced in the Example 1 using the tin electrode plated on the surface of the copper foil for the negative electrode, and using a lithium foil for the positive electrode to form a tin-lithium alloy layer.
At that time, the tin-lithium alloy layer was formed until the amount of electricity became the same extent as that required for making the lithium ion doping in Example 10. The electrode was used for the negative electrode, and the setting voltage of the constant-voltage discharge was set to 1.0 V. The energy density, the Coulomb efficiency and the capacity maintaining rate were calculated in the same manner as in Example 3.

Example 13

Si particles prepared by grinding an Si powder (particle diameter: 4 $\mu$m) with a bead mill and graphite were mixed in a weight ratio of 15:85, and a silicon-graphite composite material was obtained by a mechanical alloying method. The composite material was used as an active material, and one prepared by mixing 2.5 parts by weight of a conductive auxiliary agent and 5.0 parts by weight of a binder with 100 parts by weight of the active material was applied to a copper foil to obtain a silicon-carbon composite electrode.
The charge was then carried out to the final voltage of 50 mV in charge rate of 0.1 C in the electrolytic solution produced in the Example 1 using the electrode for the negative electrode and a lithium foil for the positive electrode. The electrode was used for the negative electrode, and the setting voltage of the constant-voltage discharge was set to 1.0 V. The energy density, the Coulomb efficiency and the capacity maintaining rate were calculated in the same manner as in Example 3.

Example 14

The charge was carried out to the final voltage of 50 mV in charge rate of 0.1 C in the electrolytic solution produced in Example 1 using an electrode having a mixed carbon active material in which natural graphite and hardly graphitized carbon is mixed in a weight ratio of 80:20 for a negative electrode and using a lithium foil for a positive electrode. The electrode was used for the negative electrode, and the setting voltage of the constant-voltage discharge was set to 1.0 V. The energy density, the Coulomb efficiency and the capacity maintaining rate were calculated in the same manner as in Example 3.

Example 15

This example was carried out in the same manner as in Example 11 except for using an electrolytic solution prepared by adding $NaPF_6$ of 0.05 % by weight to an electrolytic solution in which $LiPF_6$ of 1.15 mol/L was dissolved in a solvent of a mixture of EC and EMC by a volume ratio of 1:3.

Example 16

This example was carried out in the same manner as in Example 11 except for using an electrolytic solution prepared by adding $KPF_6$ of 0.05 % by weight to an electrolytic solution in which $LiPF_6$ of 1.15 mol/L was dissolved in a solvent of a mixture of EC and EMC by a volume ratio of 1:3.

Example 17

This example was carried out in the same manner as in Example 3 except for using non-porous carbon having a specific surface area of 400 $m^2/g$ and an interlayer distance $d_{002}$ of carbon microcrystals of 0.367 nm for the positive electrode active material layer.

Example 18

This example was carried out in the same manner as in Example 4 except for using non-porous carbon having a specific surface area of 400 $m^2/g$ and an interlayer distance $d_{002}$ of carbon microcrystals of 0.367 nm for the positive electrode active material layer.

Example 19

This example was carried out in the same manner as in Example 5 except for using non-porous carbon having a specific surface area of 400 $m^2/g$ and an interlayer distance $d_{002}$ of carbon microcrystals of 0.367 nm for the positive electrode active material layer.

Example 20

This example was carried out in the same manner as in Example 6 except for using non-porous carbon having a specific surface area of 400 $m^2/g$ and an interlayer distance $d_{002}$ of carbon microcrystals of 0.367 nm for the positive electrode active material layer.

Example 21

This example was carried out in the same manner as in Example 11 except for using non-porous carbon having a specific surface area of 400 $m^2/g$ and an interlayer distance $d_{002}$ of carbon microcrystals of 0.367 nm for the positive electrode active material layer.

Example 22

This example was carried out in the same manner as in Example 3 except for using non-porous carbon having a specific surface area of 490 $m^2/g$ and an interlayer distance $d_{002}$ of carbon microcrystals of 0.378 nm for the positive electrode active material layer.

Example 23

This example was carried out in the same manner as in Example 3 except for using non-porous carbon having a specific surface area of 120 $m^2/g$ and an interlayer distance $d_{002}$ of carbon microcrystals of 0.362 nm for the positive electrode active material layer.

Example 24

This example was carried out in the same manner as in Example 11 except for using non-porous carbon having a specific surface area of 150 $m^2/g$ and an interlayer distance $d_{002}$ of carbon microcrystals of 0.365 nm for the positive electrode active material layer and using non-porous carbon having a specific surface area of 400 $m^2/g$ and an interlayer distance $d_{002}$ of carbon microcrystals of 0.367 nm for the negative electrode active material layer.

Example 25

This example was carried out in the same manner as in Example 11 except for using non-porous carbon having a specific surface area of 150 m$^2$/g and an interlayer distance $d_{002}$ of carbon microcrystals of 0.365 nm for the positive electrode active material layer and using non-porous carbon having a specific surface area of 400 m$^2$/g and an interlayer distance $d_{002}$ of carbon microcrystals of 0.367 nm for the negative electrode active material layer.

Comparative Example 3

This comparative example was carried out in the same manner as in Example 3 except for using the electrode produced in Comparative Example 1 for the positive electrode.

Comparative Example 4

This comparative example was carried out in the same manner as in Example 4 except for using the electrode produced in Comparative Example 1 for the positive electrode.

Comparative Example 5

This comparative example was carried out in the same manner as in Example 5 except for using the electrode produced in Comparative Example 1 for the positive electrode.

Comparative Example 6

This comparative example was carried out in the same manner as in Example 6 except for using the electrode produced in Comparative Example 1 for the positive electrode.

Comparative Example 7

This comparative example was carried out in the same manner as in Example 7 except for using the electrode produced in Comparative Example 1 for the positive electrode.

Comparative Example 8

This comparative example was carried out in the same manner as in Example 11 except for using the electrode produced in Comparative Example 1 for the positive electrode.

Comparative Example 9

This comparative example was carried out in the same manner as in Example 12 except for using the electrode produced in Comparative Example 1 for the positive electrode.

Comparative Example 10

This comparative example was carried out in the same manner as in Example 13 except for using the electrode produced in Comparative Example 1 for the positive electrode.

Comparative Example 11

This comparative example was carried out in the same manner as in Example 14 except for using the electrode produced in Comparative Example 1 for the positive electrode.

Comparative Example 12

This comparative example was carried out in the same manner as in Example 3 except for using non-porous carbon having a specific surface area of 370 m$^2$/g and an interlayer distance $d_{002}$ of carbon microcrystals of 0.393 nm for the positive electrode active material layer.

Comparative Example 13

This comparative example was carried out in the same manner as in Example 3 except for using non-porous carbon having a specific surface area of 10 m$^2$/g and an interlayer distance $d_{002}$ of carbon microcrystals of 0.359 nm for the positive electrode active material layer.

Comparative Example 14

This comparative example was carried out in the same manner as in Example 3 except for using non-porous carbon having a specific surface area of 510 m$^2$/g and an interlayer distance $d_{002}$ of carbon microcrystals of 0.383 nm for the positive electrode active material layer.

Results

As is apparent from the following table 1, it was confirmed that the capacity maintaining rates of Examples 1 and 2 were higher than those of Comparative Examples 1 and 2 and the initial irreversible capacity of the battery device could be reduced. When Example 2 is compared with Comparative Example 2, the final voltages in charge of Example 2 and Comparative Example 2 being 4.7 V, it was confirmed that the capacity maintaining rate of Example 2 had high efficiency of 80 %, and the increase of the operating voltage could be attained.

Table 1

| | Final voltage [V] | | Energy density at initial cycle [Wh/kg] | | [Wh/L] | | Energy density at fifth cycle [Wh/kg] | | [Wh/L] | | (Discharge energy density at fifth cycle) /(charge energy density at initial cycle) $\times$ 100 [%] |
|---|---|---|---|---|---|---|---|---|---|---|---|
| | Charge | Discharge | Charge | Discharge | Charge | Discharge | Charge | Discharge | Charge | Discharge | |
| Example 1 | 4.6 | 2.2 | 125 | 78 | 113 | 71 | 133 | 133 | 120 | 120 | 106 |
| Example 2 | 4.7 | 2.2 | 218 | 118 | 197 | 107 | 216 | 174 | 195 | 157 | 80 |
| Comparative Example 1 | 4.6 | 2.2 | 337 | 183 | 160 | 87 | 245 | 167 | 117 | 79 | 50 |
| Comparative Example 2 | 4.7 | 2.2 | 603 | 199 | 287 | 95 | 194 | 175 | 92 | 83 | 29 |

As is apparent from the following table 2, it turned out that the battery devices of Examples 3 to 23 using the non-porous carbon satisfying the specific surface area of 500 $m^2$/g or less and the interlayer distance $d_{002}$ of carbon microcrystals of 0.36 to 0.38 nm for the positive electrode active material layer had a higher Coulomb efficiency than those of the battery devices of Comparative Examples 3 to 13 even at a higher operating voltage and can suppress the reduction of the capacity maintaining rate.

Table 2

| | Discharge capacity at 25th cycle [Wh/L] | Coulomb efficiency at 25th cycle [%] | Capacity maintaining rate [%] |
|---|---|---|---|
| Example 3 | 166 | 96 | 103 |
| Example 4 | 209 | 95 | 102 |
| Example 5 | 186 | 91 | 103 |
| Example 6 | 249 | 85 | 103 |
| Example 7 | 223 | 88 | 103 |
| Example 8 | 153 | 95 | 101 |
| Example 9 | 170 | 97 | 103 |
| Example 10 | 178 | 93 | 102 |
| Example 11 | 193 | 97 | 121 |
| Example 12 | 205 | 93 | 103 |
| Example 13 | 210 | 90 | 99 |
| Example 14 | 180 | 97 | 115 |
| Example 15 | 187 | 98 | 103 |
| Example 16 | 185 | 97 | 105 |
| Example 17 | 193 | 97 | 102 |
| Example 18 | 219 | 94 | 101 |
| Example 19 | 204 | 89 | 102 |
| Example 20 | 251 | 86 | 104 |
| Example 21 | 222 | 85 | 93 |
| Example 22 | 195 | 96 | 115 |
| Example 23 | 153 | 95 | 103 |
| Example 24 | 169 | 92 | 94 |
| Example 25 | 182 | 95 | 92 |
| Comparative Example 3 | 122 | 94 | 97 |
| Comparative Example 4 | 139 | 87 | 95 |
| Comparative Example 5 | 143 | 88 | 98 |
| Comparative Example 6 | 161 | 77 | 98 |
| Comparative Example 7 | 121 | 85 | 98 |
| Comparative Example 8 | 102 | 77 | 60 |

(continued)

|  | Discharge capacity at 25th cycle [Wh/L] | Coulomb efficiency at 25th cycle [%] | Capacity maintaining rate [%] |
|---|---|---|---|
| Comparative Example 9 | 107 | 72 | 61 |
| Comparative Example 10 | 112 | 72 | 60 |
| Comparative Example 11 | 97 | 76 | 63 |
| Comparative Example 12 | 6.2 | 94 | 97 |
| Comparative Example 13 | 10.4 | 86 | 221 |
| Comparative Example 14 | 49.7 | 92 | 65 |

**Claims**

1. A battery device comprising:

   - a positive electrode having at least a positive electrode active material layer and a positive electrode collector;
   - a negative electrode;
   - a separator; and
   - an organic electrolytic solution,

   wherein the positive electrode active material layer contains non-porous carbon having a specific surface area of 130 $m^2$/g to 500 $m^2$/g as a main component, and
   wherein the material forming the negative electrode is different from a positive electrode active material, and contains a material capable of storing and releasing alkali metal ions or alkaline earth metal ions as a main component and an interlayer distance $d_{002}$ of carbon microcrystals of the non-porous carbon is 0.36 nm to 0.38 nm.

2. The battery device according to claim 1,
   wherein the negative electrode contains a carbonaceous material different from the carbonaceous material of the positive electrode active material.

3. The battery device according to claim 2,
   wherein the carbonaceous material is a graphite material.

4. The battery device according to claim 1 or 2,
   wherein the material forming the negative electrode is a simple substance, alloy or compound of metal elements capable of storing and releasing the alkali metal ions or the alkaline earth metal ions, or a simple substance, alloy or compound of semimetal elements.

5. The battery device according to claim 4,
   wherein the material forming the negative electrode is any one simple substance, alloy or compound of lithium, silicon, tin and aluminum.

6. The battery device according to any one of claims 1 to 5,
   wherein the organic electrolytic solution contains an organic solvent, and an alkali metal salt or alkaline earth metal salt dissolved in the organic solvent.

7. The battery device according to claim 6,
   wherein the alkali metal salt contains at least a kind of lithium salt.

8. The battery device according to claim 7,
   wherein the lithium salt is at least one of $LiBF_4$ and $LiPF_6$.

**Patentansprüche**

1. Batterievorrichtung, die Folgendes aufweist:

   - eine positive Elektrode, die zumindest eine Aktivmaterialschicht der positiven Elektrode und einen positiven Elektrodenkollektor aufweist;
   - eine negative Elektrode;
   - einen Separator; und
   - eine organische Elektrolytlösung,

   wobei die Aktivmaterialschicht der positiven Elektrode nicht porösen Kohlenstoff mit einer spezifischen Oberfläche von 130 m²/g bis 500 m²/g als eine Hauptkomponente enthält und
   wobei das die negative Elektrode bildende Material sich von dem Aktivmaterial der positiven Elektrode unterscheidet und ein Material, das in der Lage ist, Alkalimetallionen oder Erdalkalimetallionen zu speichern und freizugeben, als eine Hauptkomponente enthält und
   wobei der Zwischenschichtabstand $d_{002}$ von Kohlenstoff-Mikrokristallen des nicht porösen Kohlenstoffs 0,36 nm bis 0,38 nm beträgt.

2. Batterievorrichtung nach Anspruch 1,
   wobei die negative Elektrode ein kohlenstoffhaltiges Material enthält, das sich von dem kohlenstoffhaltigen Material des Aktivmaterials der positiven Elektrode unterscheidet.

3. Batterievorrichtung nach Anspruch 2,
   wobei das kohlenstoffhaltige Material ein Graphitmaterial ist.

4. Batterievorrichtung nach Anspruch 1 oder 2,
   wobei das die negative Elektrode bildende Material eine einfache Substanz, eine Legierung oder eine Verbindung von Metallelementen ist, die in der Lage ist, die Alkalimetallionen oder die Erdalkalimetallionen zu binden und freizugeben, oder eine einfache Substanz, eine Legierung oder eine Verbindung von Halbmetallelementen ist.

5. Batterievorrichtung nach Anspruch 4,
   wobei das die negative Elektrode bildende Material irgendeine einfache Substanz, eine Legierung oder eine Verbindung von Lithium, Silicium, Zinn und Aluminium ist.

6. Batterievorrichtung nach irgendeinem der Ansprüche 1 bis 5,
   wobei die organische Elektrolytlösung ein organisches Lösungsmittel und ein in dem organischen Lösungsmittel gelöstes Alkalimetallsalz oder Erdalkalimetallsalz enthält.

7. Batterievorrichtung nach Anspruch 6,
   wobei das Alkalimetallsalz zumindest eine Art von Lithiumsalz enthält.

8. Batterievorrichtung nach Anspruch 7,
   wobei das Lithiumsalz mindestens eines von $LiBF_4$ und $LiPF_6$ ist.

**Revendications**

1. Batterie comprenant :

   - une électrode positive possédant au moins une couche de matériau actif d'électrode positive et un collecteur d'électrode positive,
   - une électrode négative,
   - un séparateur, et
   - une solution d'électrolyte organique,

dans laquelle la couche de matériau actif d'électrode positive contient, à titre de constituant principal, du carbone non poreux ayant une surface spécifique de 130 m$^2$/g à 500 m$^2$/g, et

dans laquelle le matériau formant l'électrode négative est différent du matériau actif de l'électrode positive, et contient, à titre de constituant principal, un matériau capable de stocker et de libérer des ions de métal alcalin ou des ions de métal alcalino-terreux et

la distance entre les plans d$_{002}$ de microcristaux de carbone du carbone non poreux est de 0,36 nm à 0,38 nm.

**2.** Batterie selon la revendication 1,
dans laquelle l'électrode négative contient un matériau carboné différent du matériau carboné du matériau actif de l'électrode positive.

**3.** Batterie selon la revendication 2,
dans laquelle le matériau carboné est un matériau de graphite.

**4.** Batterie selon la revendication 1 ou 2,
dans laquelle le matériau formant l'électrode négative est une substance simple, un alliage ou un composé d'éléments métalliques capable de stocker et libérer les ions de métal alcalin ou les ions de métal alcalino-terreux, ou une substance simple, un alliage ou un composé d'éléments de semi-métal.

**5.** Batterie selon la revendication 4,
dans laquelle le matériau formant l'électrode négative est une substance simple, un alliage ou un composé de lithium, silicium, d'étain ou d'aluminium.

**6.** Batterie selon l'une quelconque des revendications 1 à 5,
dans laquelle la solution d'électrolyte organique contient un solvant organique, et un sel de métal alcalin ou un sel de métal alcalino-terreux dissous dans le solvant organique.

**7.** Batterie selon la revendication 6,
dans laquelle le sel de métal alcalin contient au moins une espèce de sel de lithium.

**8.** Batterie selon la revendication 7,
dans laquelle le sel de lithium est au moins un de LiBF$_4$ et LiPF$_6$.

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005294780 A
- JP 2002025867 A
- JP 2003051430 A
- WO 2004079759 A
- JP 2005286178 A
- JP 3689948 B
- JP 11031637 A

**Non-patent literature cited in the description**

- *DENKI KAGAKU,* 1998, vol. 66, 1311
- *Electrochemistry,* 2001, vol. 69, 487
- *Journal of The Electrochemical Society,* 2005, vol. 152 (3), A560-A565